# EUROPÄISCHE PATENTSCHRIFT

(11) **EP 3 574 807 B1**
(45) Veröffentlichungstag und Bekanntmachung des Hinweises auf die Patenterteilung: **08.09.2021**
(21) Anmeldenummer: 19173287.4
(22) Anmeldetag: 08.05.2019
(51) Int. Cl.: A47J 31/06, A47J 31/44

(54) **VORRICHTUNG UND VERFAHREN ZUR ZUBEREITUNG EINES GETRÄNKS**
DEVICE AND METHOD FOR PREPARING A BEVERAGE
DISPOSITIF ET PROCÉDÉ DE PRÉPARATION D'UNE BOISSON

(30) Priorität: 30.05.2018 DE 102018113016
(43) Veröffentlichungstag der Anmeldung: 04.12.2019
(73) Patentinhaber: Melitta Europa GmbH & Co. KG, 32427 Minden (DE)
(72) Erfinder: SACHTLEBEN, Andreas, 32427 Minden (DE)
(74) Vertreter: Dantz, Jan Henning

(56) Entgegenhaltungen:
- DE-U1- 8 110 818
- GB-A- 400 077
- US-A- 5 865 094

## Beschreibung

Die vorliegende Erfindung betrifft eine Vorrichtung zur Zubereitung eines Getränks nach dem Oberbegriff des Anspruches 1, und ein Verfahren zur Zubereitung eines Getränks, insbesondere von Kaffee, nach dem Oberbegriff des Anspruches 8.

Es gibt Maschinen zur Zubereitung von Filterkaffee, bei denen über eine Pumpe heißes Wasser in ein Filtergefäß eingefüllt wird. Die Extraktion des Kaffeemehls ist allerdings ungleichmäßig und gerade für die Zubereitung mit hochwertigen Kaffeebohnen nicht optimal. Das Filtergefäß ist an einem Gehäuse der Maschine gehalten und besitzt einen Tropfschutz in Form eines Ventils, das durch einen Auffangbehälter geöffnet werden kann. Ein solcher Tropfschutz ist für ist für Filtergefäße für die Handbrühung nicht einsetzbar, da das Filtergefäße dann nur lose auf einen Auffangbehälter abgestellt wird.

Die EP 3 289 935 A1 offenbart ein Filtergefäß zur Zubereitung von Kaffee durch eine Handbrühung. Das Filtergefäß kann auf unterschiedliche Behälter abgestellt werden, um die Vorteile der Handbrühung bei der Zubereitung von Kaffee nutzen zu können. Bei der Zubereitung in dem Filtergefäß besteht allerdings der Nachteil, dass nach der Zubereitung noch Restflüssigkeit aus dem Filtergefäß tropfen kann, wenn dieses nach dem Brühvorgang auf einer Ablage abgestellt wird.

DE 81 10 818 U1 offenbart eine elektrische Kaffeemaschine mit einem Filterbecher, der in einem Außenbecher gehalten ist und einen unteren Auslass aufweist, der als wahlweise verschließbares Ventil ausgebildet ist, um eine unter den Filterbecher gestellte Kaffeekanne ohne Gefahr des weiteren Austropfens von Kaffee wegnehmen zu können. Hierfür ist der Filterbecher in dem Außenbecher bewegbar gelagert und kann ein Ventil öffnen oder schließen.

Es ist daher Aufgabe der vorliegenden Erfindung, eine Vorrichtung und ein Verfahren zur Zubereitung eines Getränks zu schaffen, das die Zubereitung vereinfacht und das Problem durch die aus dem Filtergefäß herausströmende Restflüssigkeit beseitigt.

Diese Aufgabe wird mit einer Vorrichtung mit den Merkmalen des Anspruches 1 sowie einem Verfahren mit den Merkmalen des Anspruches 8 gelöst.

Die erfindungsgemäße Vorrichtung zur Zubereitung eines Getränks umfasst ein Filtergefäß, in das Extraktionsmaterial, wie Kaffee, unmittelbar oder über Zwischenschaltung eines Filtereinsatzes, einfüllbar ist, wobei ein Filterständer vorgesehen ist, an dem das Filtergefäß auf einem Stützelement abstellbar ist. Unterhalb des Stützelementes ist eine Aufnahme zum Abstellen mindestens eines Behälters zum Auffangen der extrahierten Flüssigkeit vorgesehen. Das Filtergefäß wird somit nicht unmittelbar auf dem Behälter abgestellt, wie dies bei der Handbrühung üblich ist, sondern auf dem Stützelement, so dass der mindestens eine Behälter nach der Zubereitung des Getränks auf einfache Weise entnommen werden kann. Die Restflüssigkeit kann dann an dem Filterständer gesammelt werden, wahlweise an einer Auffangwanne an der Aufnahme oder an dem Stützelement.

Erfindungsgemäß ist unterhalb des Filtergefäßes zumindest eine Öffnung an dem Stützelement zum Durchleiten der extrahierten Flüssigkeit aus dem Filtergefäß vorgesehen. An dem Stützelement ist dabei ein Auffangelement vorgesehen und das Filtergefäß kann von einer die extrahierte Flüssigkeit durchleitenden Position in eine die extrahierte Flüssigkeit auffangende Position verstellt werden, beispielsweise um eine Drehung um 90°. In der Auffangposition dient das als Wanne ausgebildete Auffangelement zum Auffangen einer Restflüssigkeit aus dem Filtergefäß. Für eine einfache Handhabung kann das Filtergefäß angehoben und an dem Stützelement in vorbestimmten Positionen abgesetzt werden, in denen das Filtergefäß gegen ein Verdrehen oder Verschieben gesichert ist. Zur Reinigung kann das Auffangelement dann später nach oben aus dem Stützelement entnommen werden, so dass der Filterständer stehenbleiben kann.

Für eine sichere Halterung des Filtergefäßes kann der Filterständer an dem Stützelement Haltemittel aufweisen, beispielsweise Vorsprünge oder Taschen, die formschlüssig mit einem Anlageelement des Filtergefäßes in Eingriff stehen, so dass das Filterelement in der auf dem Stützelement abgestellten Position gegen eine horizontale Bewegung oder Drehung gesichert ist. Optional kann das Filtergefäß auch an dem Stützelement verrastet werden. In jedem Fall kann das Filtergefäß nach oben von dem Stützelement abgenommen werden.

Das Stützelement kann als horizontaler Balken ausgebildet sein, der an einem oder zwei Pfosten abgestützt ist. Eine Aufnahme unterhalb des Stützelementes kann somit C-förmig oder brückenförmig umgeben sein.

Der Filterständer weist vorzugsweise im unteren Bereich der Aufnahme eine Abstellfläche auf, an der Markierungen vorgesehen sein können, die zur Positionierung von einem oder zwei Behältern zum Auffangen der Flüssigkeit dienen. Vorzugsweise sind an dem Filtergefäß zwei voneinander beabstandete Auslassöffnungen und an dem Stützelement und/oder dem Auffangelement ebenfalls zwei voneinander beabstandete Öffnungen zum Durchleiten der extrahierten Flüssigkeit vorgesehen, so dass bei der Zubereitung wahlweise ein oder zwei Behälter befüllt werden können.

Bei dem erfindungsgemäßen Verfahren wird ein Filtergefäß auf einem Stützelement des Filterständers aufgesetzt, und vorher oder nachher wird das Filtergefäß mit einem Filtereinsatz und Extraktionsmaterial gefüllt. Vorher oder nachher kann mindestens ein Behälter in eine Aufnahme des Filterständers unterhalb des Filtergefäßes abgestellt werden. Anschließend wird durch ein- oder mehrmaliges Aufgießen einer Flüssigkeit in dem Filtergefäß ein Getränk zubereitet, wobei nach der Zubereitung das Filtergefäß relativ zu dem Auffangelement von einer Durchflussposition in eine Auffangposition bewegt wird. Vorzugsweise wird das Filtergefäß hierfür gedreht. Dadurch kann der Nutzer unmittelbar nach der Zubereitung des Getränkes dieses genießen und muss sich nicht um die Reinigung des Filtergefäßes und einer aus diesem noch ausströmenden Restflüssigkeit kümmern. Das wannenförmige Auffangelement wird zu einem späteren Zeitpunkt abgenommen und gereinigt.

Das Filtergefäß ist vorzugsweise nach oben offen, und es wird heißes Wasser von Hand in das Filtergefäß mit dem Extraktionsmaterial eingegossen.

Die Erfindung wird nachfolgend anhand eines Ausführungsbeispiels mit Bezug auf die beigefügten Zeichnungen näher erläutert. Es zeigen:

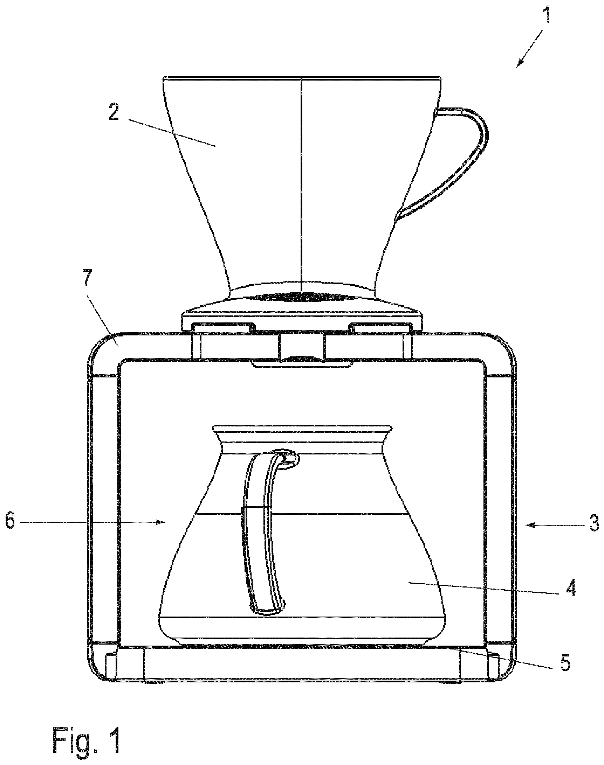

- Figur 1: eine erfindungsgemäße Vorrichtung zur Zubereitung eines Getränks;
- Figuren 2A und 2B: zwei Ansichten des Filterständers der Vorrichtung der Figur 1;
- Figur 3: eine Detailansicht der Verbindung zwischen Stützelement und Filtergefäß der Vorrichtung der Figur 1;
- Figuren 4A und 4B: zwei Ansichten des Auffangelementes an dem Stützelement;
- Figur 5: eine geschnittene Detailansicht bei der Zubereitung eines Getränks;
- Figur 6: eine geschnittene perspektivische Ansicht der Vorrichtung der Figur 1 mit dem Filtergefäß in einer zu Figur 1 um 90° gedrehten Auffangposition;
- Figur 7: eine perspektivische Ansicht der Vorrichtung der Figur 1 ohne Filtergefäß;
- Figur 8: eine Ansicht der Abstellfläche der Vorrichtung der Figur 1, und
- Figur 9: eine perspektivische Ansicht der Vorrichtung der Figur 1 bei der Befüllung von zwei Behältern.

Eine Vorrichtung 1 zur Zubereitung eines Getränks, insbesondere Kaffee, umfasst ein Filtergefäß 2, das auf einem Filterständer 3 abstellbar ist. Der Filterständer 3 besitzt eine Abstellfläche 5 für einen Behälter 4, der zum Auffangen von Flüssigkeit aus dem Filtergefäß 2 dient. Der Filterständer 3 umfasst ein Stützelement 7, insbesondere einen horizontalen Balken, auf dem das Filtergefäß 2 abgestellt ist. In das Filtergefäß 2 kann ein Extraktionsmaterial, wie Kaffeemehl, entweder unmittelbar oder unter Zwischenschaltung eines Filtereinsatzes, insbesondere eines Filterpapiereinsatzes, eingefüllt werden.

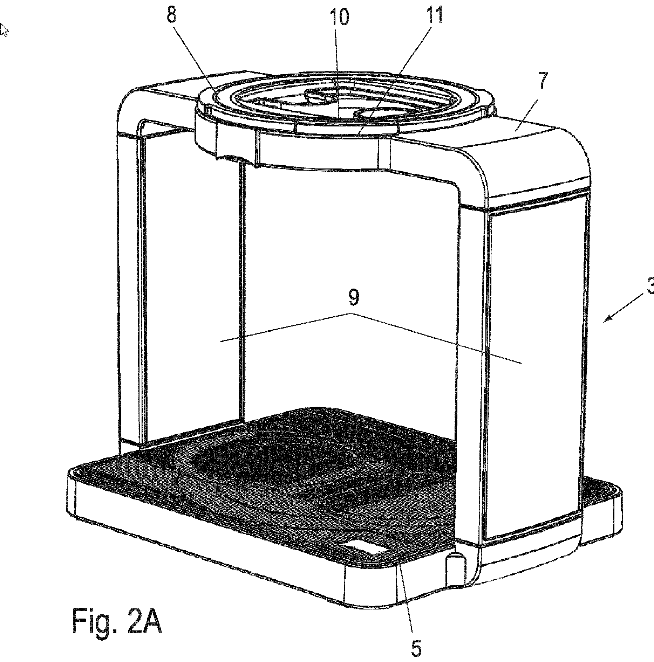

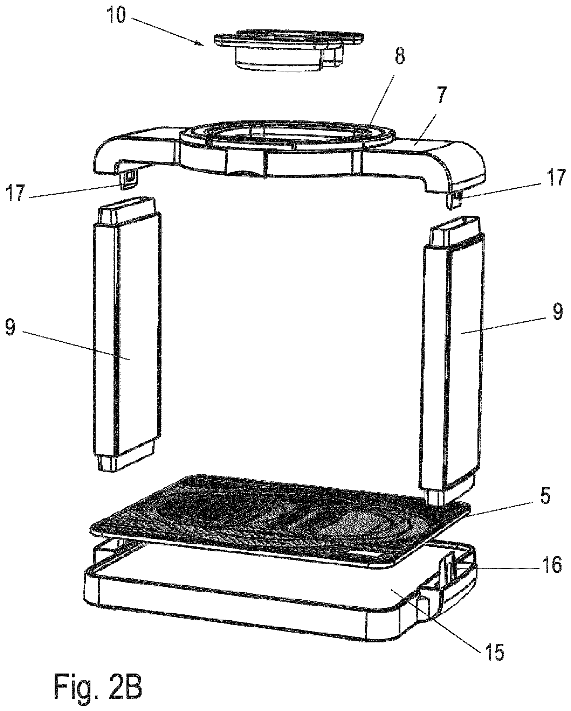

In Figur 2 ist der Filterständer 3 ohne das Filtergefäß 2 gezeigt. An der Oberseite des Stützelementes 7 befindet sich ein Ring 8 zum Halten des Filtergefäßes 2, an dem über den Umfang verteilt mehrere Vorsprünge 11 vorgesehen sind. Innerhalb des Ringes 8 befindet sich ein Auffangelement 10, das drehfest an dem Stützelement 7 gehalten ist. Das Auffangelement 10 ist dabei wannenförmig ausgebildet und in einer stufenförmigen Aufnahme an dem Ring 8 abgestützt.

Wie insbesondere in Figur 2B gezeigt ist, umfasst der Filterständer 3 zwei voneinander beabstandete Pfosten 9, an denen das balkenförmige Stützelement 7 abgestützt ist. Das Stützelement 7 weist dabei an gegenüberliegenden Enden nach unten hervorstehende Rastvorsprünge 17 auf, die in entsprechende Rastaufnahmen an dem Pfosten 9 einsteckbar sind. Die Pfosten 9 sind an einer Unterseite an einem Fußelement 15 fixierbar, an denen ein Rastelement 16 nach oben hervorsteht, das in die Pfosten 9 einsteckbar ist. Auf dem Fußelement 15 ist eine Abstellfläche 5 angeordnet, beispielsweise eine lose aufgelegte Matte aus einem elastischen Material.

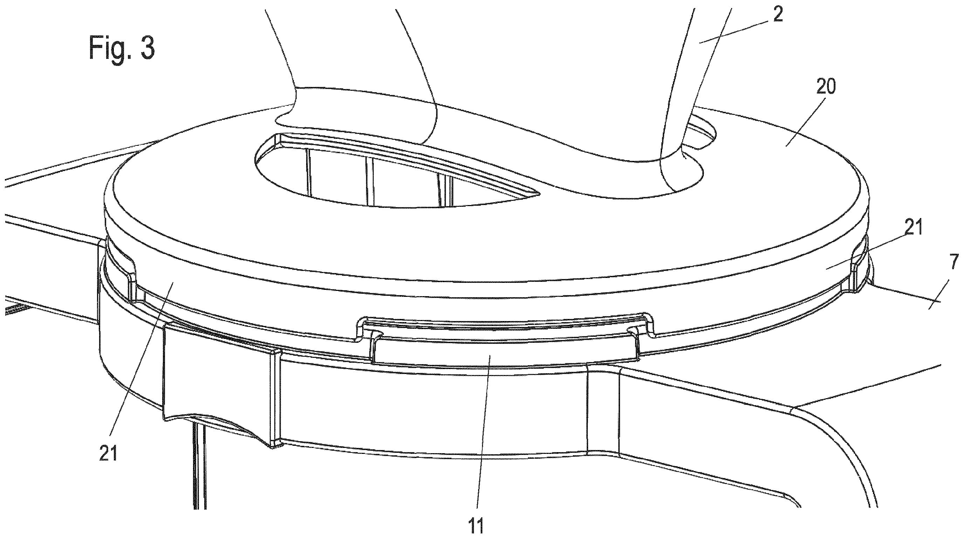

In Figur 3 ist der Bereich des Filtergefäßes 2 benachbart zu dem Stützelement 7 gezeigt. Das Filtergefäß 2 umfasst ein ringförmiges Fußelement 20 mit einem nach unten hervorstehenden Rand 21, an dem Aufnahmen oder Aussparungen ausgebildet sind, in die nach oben ragende Vorsprünge 11 an dem Ring 8 eingreifen. Das Filtergefäß 2 kann somit in unterschiedlichen Positionen auf dem Stützelement 7 abgestellt werden und ist durch den formschlüssigen Eingriff der Vorsprünge 11 an dem nach unten hervorstehenden Rand 21 gegen ein Verschieben oder Verdrehen gesichert. Vorzugsweise sind vier um 90° versetzte Positionen für das Filtergefäß 2 vorgesehen, von denen zwei Durchflusspositionen und zwei Auffangpositionen sind.

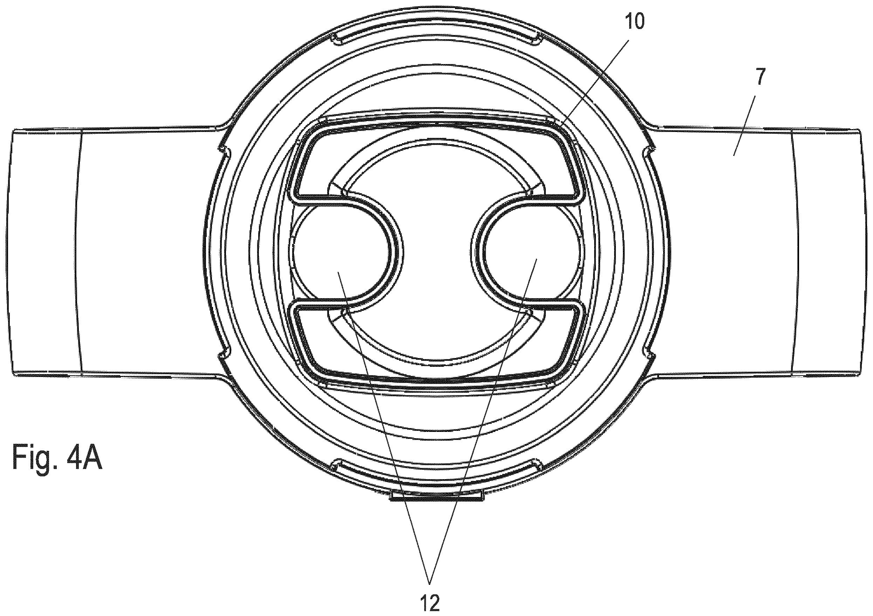

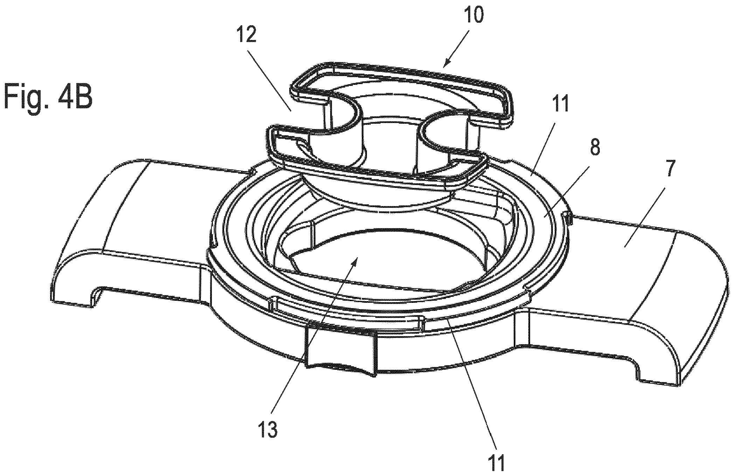

In den Figuren 4A und 4B ist das Auffangelement 10 an dem Stützelement 7 gezeigt. Das Auffangelement 10 ist schalenförmig ausgebildet und über eine ringförmige Wanne in einer Halterung 13 an dem Stützelement 7 abgestützt. Das Auffangelement 10 weist dabei an gegenüberliegenden Seiten zwei Öffnungen 12 auf, die in einer Durchlassposition unterhalb von Öffnungen des Filtergefäßes 2 angeordnet sind. Wird das Filtergefäß 2 an dem Stützelement 7 gedreht, beispielsweise um 90°, gelangt eine Flüssigkeit aus dem Filtergefäß 2 nicht mehr durch die Öffnungen 12 hindurch, sondern in die Wanne des Auffangelementes 10.

Das Auffangelement 10 hat zwei Öffnungen 12, die als seitliche Ausschnitte ausgebildet sind, durch die während der Kaffeezubereitung der Kaffee fließt. Dazu steht der Filtergefäß 2 auf dem Stützelement 7 in einer ersten Position. Nach Beendigung der Kaffeezubereitung wir das Filtergefäß 2 um 90° gedreht. Damit befindet es sich in einer Auffangposition, in der restlicher Kaffee nicht durch die Öffnungen 12 in dem Auffangelement 10, sondern direkt in das Auffangelement 10 fließt.

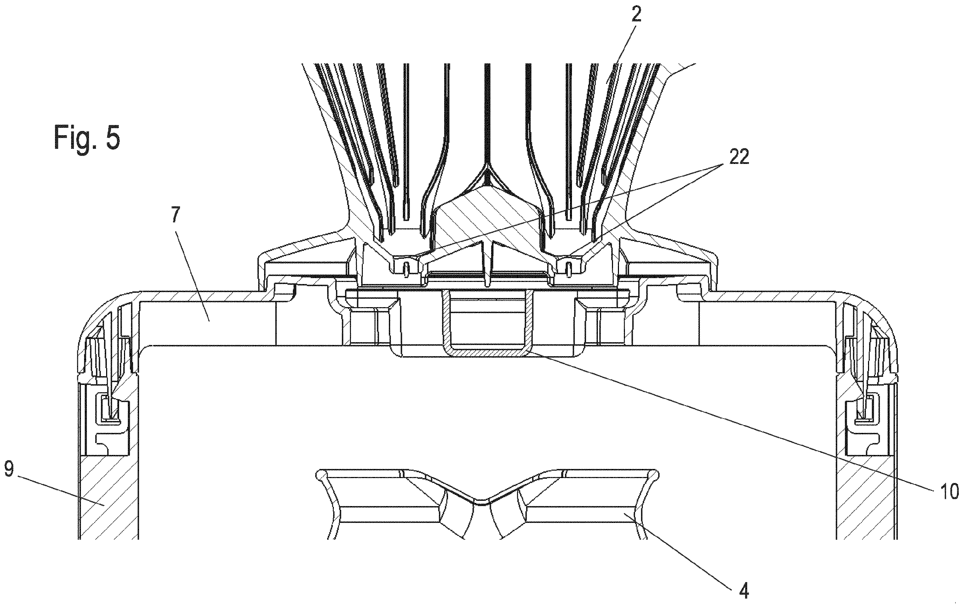

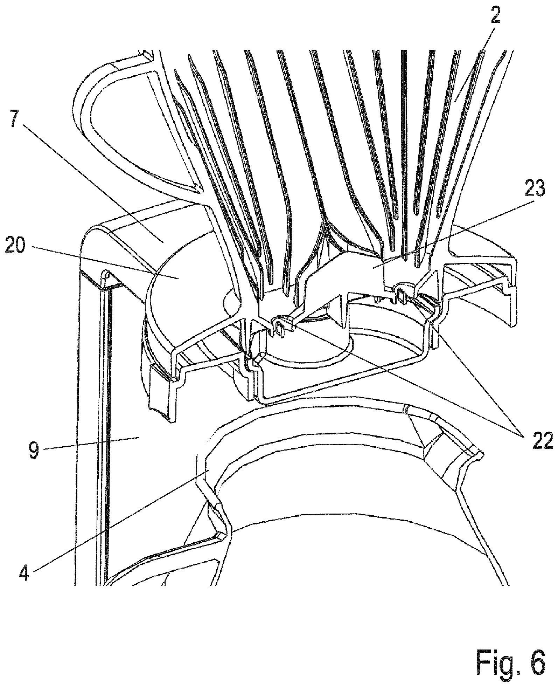

In Figur 5 ist das Auffangelement 10 in einer Durchleitposition angeordnet, so dass zwei Öffnungen 22 an der Unterseite des Filtergefäßes 2 unmittelbar oberhalb der Öffnungen 12 in dem Auffangelement 10 angeordnet sind, damit die Flüssigkeit direkt in den Behälter 4 fließen kann. Ist die Zubereitung des Getränks abgeschlossen, kann das Filtergefäß 2 gedreht werden, wie dies in Figur 6 gezeigt ist. Dann findet sich der wannenförmige Teil des Auffangelementes 10 unterhalb der beiden Öffnungen 22, und die Restflüssigkeit strömt in das Auffangelement 10. Der Benutzer kann dann den Behälter 4 aus der Aufnahme 6 entnehmen, ohne dass ein Heruntertropfen von Restflüssigkeit zu befürchten ist.

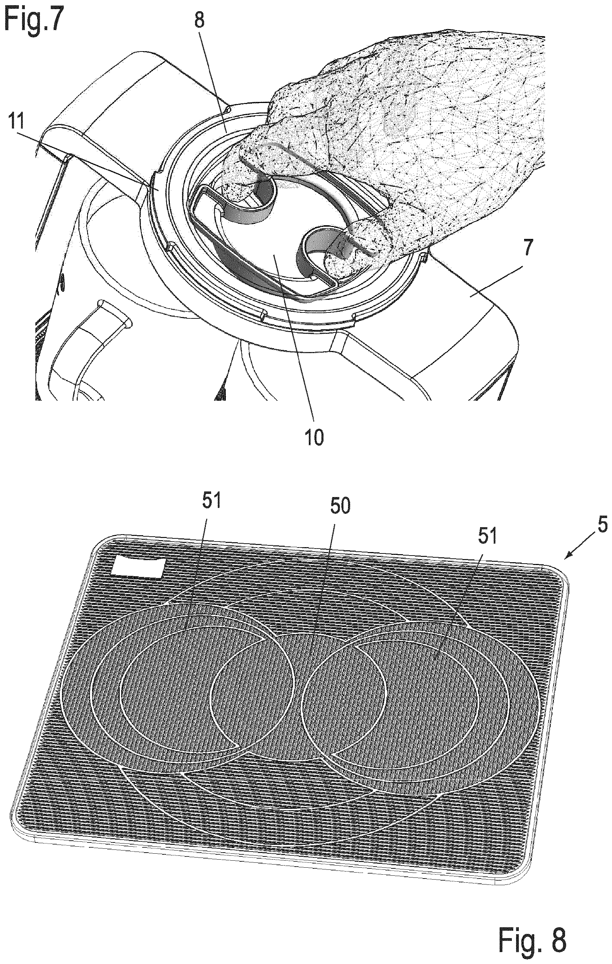

In Figur 7 ist eine Entnahme des Auffangelementes 10 mit abgenommenem Filtergefäß 2 gezeigt. Die Finger können zum Zwecke des Entnehmens in die Öffnungen 12 des Auffangelementes 10 eingeführt werden. Damit ist das Auffangelement 10 einfach zu entnehmen.

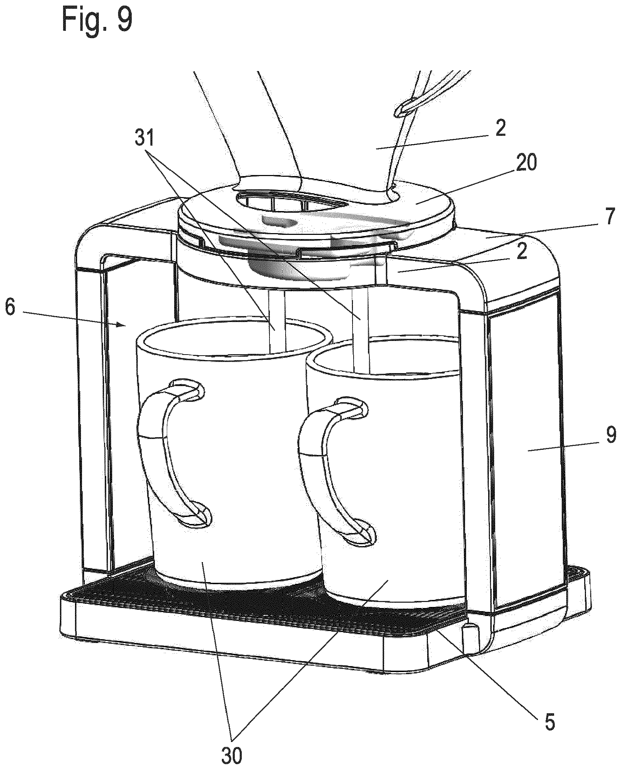

In Figur 8 ist die Abstellfläche 5 gezeigt, die an ihrer Oberseite Markierungen zur Positionierung von einem oder mehreren Behältern aufweist. Eine mittige Markierung 50 befindet sich etwa mittig unterhalb des Stützelements 7 und dient als Positionierungshilfe, wenn nur ein einziger Behälter 4 auf der Abstellfläche 5 abgestellt wird. Zudem sind eine oder mehrere Markierungen 51 vorgesehen, beispielsweise Kreise oder Punkte, die symmetrisch zu einer Mittelebene angeordnet sind, die sich mittig durch das Stützelement 7 erstreckt. Dadurch können zwei Behälter auf der Abstellfläche 5 abgestellt werden, die beide gleichzeitig über das Filtergefäß 2 mit einem Getränk gefüllt werden, wie dies in Figur 9 gezeigt ist. Die beiden als Tassen ausgebildeten Behälter 30 sind auf der Abstellfläche 5 angeordnet, und ein Flüssigkeitsstrahl 31 aus dem Filtergefäß 2 führt jeweils in einen der Behälter 30.

In dem dargestellten Ausführungsbeispiel ist das Stützelement 7 als horizontaler Balken ausgebildet, der mittig einen Ring 8 aufweist, in dem das Auffangelement 10 gehalten ist und auf dem das Fußelement 20 des Filtergefäßes 2 abstellbar ist. Es ist auch möglich, das Stützelement 7 nur einseitig an einem Pfosten 9 abzustützen, um eine kompaktere Bauweise zu erhalten.

Das Auffangelement 10 kann auch nur eine Öffnung 12 oder mehr als zwei Öffnungen 12 aufweisen, je nachdem wie viele Auslassöffnungen das Filtergefäß 2 besitzt.

### Bezugszeichenliste

- 1: Vorrichtung
- 2: Filtergefäß
- 3: Filterständer
- 4: Behälter
- 5: Abstellfläche
- 6: Aufnahme
- 7: Stützelement
- 8: Ring
- 9: Pfosten
- 10: Auffangelement
- 11: Vorsprung
- 12: Öffnung
- 13: Halterung
- 15: Fußelement
- 16: Rastelement
- 17: Rastvorsprung
- 20: Fußelement
- 21: Rand
- 22: Öffnung
- 30: Behälter
- 31: Flüssigkeitsstrahl
- 50: Markierung
- 51: Markierung

## Patentansprüche

1. Vorrichtung (1) zur Zubereitung eines Getränks, mit einem Filtergefäß (2), in das ein Extraktionsmaterial einfüllbar ist, und einem Filterständer (3), auf den das Filtergefäß (2) auf einem Stützelement (7) abstellbar ist, wobei der Filterständer (3) unterhalb des Stützelementes (7) eine Aufnahme (6) zum Abstellen mindestens eines Behälters (4, 30) zum Auffangen der extrahierten Flüssigkeit aus dem Filtergefäß (2) aufweist, wobei unterhalb des Filtergefäßes (2) mindestens eine Öffnung (12) zum Durchleiten der extrahierten Flüssigkeit aus dem Filtergefäß (2) vorgesehen ist, und das Filtergefäß (2) von einer die extrahierte Flüssigkeit durchleitenden Position in einer die extrahierte Flüssigkeit auffangende Position verstellbar ist, **dadurch gekennzeichnet, dass** ein als Wanne ausgebildetes Auffangelement (10) an dem Stützelement (7) vorgesehen ist, dass in das Auffangelement (10) eine Restflüssigkeit aus dem Filtergefäß (2) einfüllbar ist, wobei das Auffangelement (10) zur Reinigung abnehmbar ist.

2. Vorrichtung nach Anspruch 1, **dadurch gekennzeichnet, dass** das Auffangelement (10) in eine ringförmige Aufnahme an dem Stützelement (7) eingesetzt ist.

3. Vorrichtung nach Anspruch 1 oder 2, **dadurch gekennzeichnet, dass** der Filterständer (3) an dem Stützelement (7) Haltemittel (11) aufweist, die formschlüssig mit einem Auflageelement (20) an dem Filtergefäß (2) in Eingriff stehen und das Filtergefäß (2) gegen ein Verschieben und/oder Verdrehen blockieren.

4. Vorrichtung nach einem der vorhergehenden Ansprüche, **dadurch gekennzeichnet, dass** das Filtergefäß (2) in vier um 90° versetzte Positionen auf dem Stützelement (7) abstellbar ist und in diesen vier Positionen das Filtergefäß (2) gegen ein Verdrehen gesichert ist.

5. Vorrichtung nach einem der vorhergehenden Ansprüche, **dadurch gekennzeichnet, dass** das Stützelement (7) an einem horizontalen Balken ausgebildet ist, der an einem oder zwei Pfosten (9) abgestützt ist.

6. Vorrichtung nach einem der vorhergehenden Ansprüche, **dadurch gekennzeichnet, dass** an der Aufnahme (6) eine Abstellfläche (5) mit Markierungen (50, 51) vorgesehen ist, die zur Positionierung von einem oder zwei Behältern (4, 30) zum Auffangen der Flüssigkeit dienen.

7. Vorrichtung nach einem der vorhergehenden Ansprüche, **dadurch gekennzeichnet, dass** an dem Filtergefäß (2) zwei voneinander beabstandete Auslassöffnungen (22) und an dem Stützelement (7) und/oder dem Auffangelement (10) zwei voneinander beabstandete Öffnungen (12) zum Durchleiten der extrahierten Flüssigkeit vorgesehen sind.

8. Verfahren zum Zubereiten eines Getränks, insbesondere Kaffee, mit den folgenden Schritten:
- Aufsetzen eines Filtergefäßes (2) auf ein Stützelement (7) eines Filterständers (3);
- Befüllen des Filtergefäßes (2) mit einem Filtereinsatz und einem Extraktionsmaterial ;
- Abstellen mindestens eines Behälters (4, 30) an einer Aufnahme des Filterständers (3) unterhalb des Filtergefäßes (2);
- Ein- oder mehrmaliges Aufgießen einer Flüssigkeit in das Filtergefäß (2), und nach dem Aufgießen der Flüssigkeit und Sammeln des Getränkes in dem mindestens einen Behälter (4, 30), **gekennzeichnet durch**
- Bewegen des Filtergefäßes (2) relativ zu einem als Wanne ausgebildeten Auffangelement (10) von einer Durchflussposition in eine Auffangposition, wobei das Auffangelement (10) an dem Stützelement (7) vorgesehen ist, wobei in das Auffangelement (10) eine Restflüssigkeit aus dem Filtergefäß (2) eingefüllt wird und das Auffangelement (10) von dem Stützelement (7) zu einem späteren Zeitpunkt abgenommen und gereinigt wird.

9. Verfahren nach Anspruch 8, **dadurch gekennzeichnet, dass** das Filtergefäß (2) relativ zu dem Auffangelement (10) von einer Durchflussposition in eine Auffangposition gedreht wird, vorzugsweise um 90°.

10. Verfahren nach Anspruch 8 oder 9, **dadurch gekennzeichnet, dass** das Filtergefäß (2) nach oben offen ist und heißes Wasser von Hand in das Filtergefäß (2) mit dem Extraktionsmaterial eingegossen wird.

## Claims

1. Device (1) for preparing a beverage, comprising a filter vessel (2) into which an extraction material can be filled, and a filter stand (3) on which the filter vessel (2) can be deposited on a support element (7), wherein the filter stand (3) has, below the support element (7), a receptacle (6) for deposit of at least one container (4, 30) for collecting the extracted liquid from the filter vessel (2), wherein at least one opening (12) for conducting through the extracted liquid from the filter vessel (2) is provided below the vessel (2), and the filter vessel (2) is adjustable from a position conducting through the extracted liquid to a position collecting the extracted liquid, **characterised in that** a collecting element (10), which is constructed as a trough, is provided at the support element (7) and that residual liquid from the filter vessel (2) can be poured into the collecting element (10), wherein the collecting element (10) is removable for cleaning.

2. Device according to claim 1, **characterised in that** the connecting element (10) is inserted into an annular receptacle at the support element (7).

3. Device according to claim 1 or 2, **characterised in that** the filter stand (3) has, at the support element (7), holding means (11) which are mechanically positively engaged with a support element (20) at the filter vessel (2) and block the filter vessel (2) against displacing and/or turning.

4. Device according to any one of the preceding claims, **characterised in that** the filter vessel (2) can be deposited on the support element (7) in four positions offset by 90° and in these four positions the filter vessel (2) is secured against turning.

5. Device according to any one of the preceding claims, **characterised in that** the support element (7) is formed at a horizontal beam which is supported at one or two posts (9).

6. Device according to any one of the preceding claims, **characterised in that** a deposit surface (5) with markings (50, 51), which serve for positioning one or two containers (4, 30) for collecting the liquid, is provided at the receptacle (6).

7. Device according to any one of the preceding claims, **characterised in that** for conducting through the extracted liquid two mutually spaced outlet openings (22) are provided at the filter vessel (2) and two mutually spaced openings (12) are provided at the support element (7) and/or the collecting element (10).

8. Method of preparing a beverage, particularly coffee, comprising the following steps:
- placing a filter vessel (2) on a support element (7) of a filter stand (3);
- filling the filter vessel (2) with a filter insert and an extraction material;
- depositing at least one container (4, 30) on a receptacle of the filter stand (3) below the filter vessel (2);
- pouring a liquid into the filter vessel (2) once or several times and after the pouring of the liquid and collection of the beverage in the at least one container (4, 30) **characterised by**
- moving the filter vessel (2) relative to a collecting element (10), which is constructed as a trough, from a throughflow position to a collecting position, wherein the collecting element (10) is provided at the support element (7), wherein a residual liquid from the filter vessel (2) is poured into the collecting element (10) and the collecting element (10) is removed from the support element (7) at a later point in time and cleaned.

9. Method according to claim 8, **characterised in that** the filter vessel (2) is turned, preferably through 90°, relative to the collecting element (10) from a throughflow position to a collecting position.

10. Method according to claim 8 or 9, **characterised in that** the filter vessel (2) is upwardly open and hot water is poured manually into the filter vessel (2) with the extraction material.

## Revendications

1. Dispositif (1) pour préparer une boisson comprenant un filtre (2) recevant le produit d'extraction et un support de filtre (3) sur lequel on peut déposer le filtre (2) sur un appui (7),
- le support (3) ayant sous l'appui (7), un logement (6) pour poser au moins un récipient (4, 30) recevant le liquide d'extraction du filtre (2),
- au moins une ouverture (12) sous le filtre (2) pour le passage du liquide d'extraction sortant du filtre (2) et le filtre (2) peut être déplacé d'une position laissant passer le liquide d'extraction dans une position recueillant le liquide d'extraction,
dispositif **caractérisé en ce que**
un réceptacle (10) en forme de cuvette est prévu sur l'appui (7),
le réceptacle (10) recevant le liquide résiduel du filtre (2), le récepteur (10) étant amovible pour le nettoyage.

2. Dispositif selon la revendication 1,
**caractérisé en ce que**
le réceptacle (10) se place dans un logement annulaire de l'élément d'appui (7).

3. Dispositif selon la revendication 1 ou 2,
**caractérisé en ce que**
le support (3) comporte des moyens de maintien (11) sur l'appui (7) qui coopèrent par une liaison par la forme avec un élément d'appui (20) du filtre (2), en prise et bloque le filtre (2) en coulissement et/ou en rotation.

4. Dispositif selon l'une des revendications précédentes,
**caractérisé en ce que**
le filtre (2) peut se poser dans quatre positions décalées de 90° sur l'appui (7) et dans ces quatre positions, le filtre (2) est bloqué en rotation.

5. Dispositif selon l'une des revendications précédentes,
**caractérisé en ce que**
l'appui (7) est réalisé dans une poutre horizontale qui s'appuie sur un ou deux poteaux (9).

6. Dispositif selon l'une des revendications précédentes,
**caractérisé en ce que**
le récepteur (6) comprend une surface d'appui (5) avec des marquages (50, 51) servant à positionner un ou plusieurs récipients (4, 30) pour recevoir le liquide.

7. Dispositif selon l'une des revendications précédentes,
**caractérisé en ce que**
deux orifices de sortie (22) écartés l'un de l'autre sont prévus sur le filtre (2) et deux orifices (12), écartés l'un de l'autre sont prévus dans l'appui (7) et/ou le réceptacle (10) pour le passage du liquide extrait.

8. Procédé pour préparer une boisson, notamment du café comprenant les étapes suivantes consistant à :
- déposer un filtre (2) sur un appui (7) d'un support de filtre (3),
- remplir le filtre (2) avec une garniture de filtrage et avec du produit d'extraction,
- déposer au moins un récipient (4, 30) sur le logement du support de filtre (3) sous le filtre (2),
- verser en une ou plusieurs fois un liquide dans le filtre (2) et après avoir versé le liquide et recueillir la boisson dans au moins un récipient (4, 30), **caractérisé par**
- déplacer le filtre (2) par rapport à un réceptacle (10) réalisé sous la forme d'une cuvette pour passer d'une position passante à une position de réception, le réceptacle (10) étant sur l'appui (7),
le réceptacle (10) recevant le liquide résiduel du filtre (2) et le réceptacle (10) peut être enlevé de l'appui (7), ultérieurement pour être nettoyé.

9. Procédé selon la revendication 8,
**caractérisé en ce que**
le filtre (2) peut être tourné par rapport au réceptacle (10) d'une position de passage à une position de réception, en tournant, de préférence de 90°.

10. Procédé selon la revendication 8 ou 9,
**caractérisé en ce que**
le haut du filtre (2) est ouvert et on peut verser de l'eau chaude, manuellement dans le filtre (2) contenant le produit d'extraction.
